**Europäisches Patentamt**

**European Patent Office**

**Office européen des brevets**

(19)

(11) Veröffentlichungsnummer : **0 516 615 A2**

(12) # EUROPÄISCHE PATENTANMELDUNG

(21) Anmeldenummer : **92890131.3**

(22) Anmeldetag : **29.05.92**

(51) Int. Cl.$^5$ : **B60P 1/26**

(30) Priorität : **29.05.91 AT 1089/91**

(43) Veröffentlichungstag der Anmeldung :
**02.12.92 Patentblatt 92/49**

(84) Benannte Vertragsstaaten :
**BE CH DE DK FR IT LI NL SE**

(71) Anmelder : **Primetzhofer Stahl- und Fahrzeugbau G.m.b.H. & Co. KG**
**Im Grenzwinkel 1**
**A-4060 Leonding (AT)**

(72) Erfinder : **Primetzhofer, Gerald**
**Im Bäckerfeld 7**
**A-4060 Leonding (AT)**

(74) Vertreter : **Hübscher, Heiner, Dipl.-Ing. et al**
**Patentanwälte Dipl.-Ing. Gerhard Hübscher,**
**Dipl.-Ing. Helmut Hübscher Dipl.-Ing. Heiner**
**Hübscher Spittelwiese 7**
**A-4020 Linz (AT)**

(54) **Ladebrücke für Lastfahrzeuge.**

(57)    Eine Ladebrücke (1) ist mit zwei einander gegenüberliegenden, über eine hydraulische Betätigungseinrichtung (7) um eine im Bereich ihrer Unterkanten verlaufende Schwenkachse (5) auf- und zuklappbar gelagerten Bordwänden (3) ausgerüstet, wobei die Betätigungsvorrichtung (7) einen sich im Stirnseitenbereich quer zwischen den Bordwänden (3) erstrekkenden Hydraulikzylinder (8) aufweist, der beiderends jeweils über ein Hebelgestänge mit radialem Abstand von der Schwenkachse (5) an der Bordwand (3) angelenkt ist.

Um bei hoher Funktionssicherheit ein auch vollständiges Auf-und Zuklappen zu ermöglichen, besteht das Hebelgestänge aus einem einerseits an der Bordwand (3), anderseits an einem brückenfesten Träger (6a) angelenkten Kniehebel (9), an dessen Knickgelenk (12) der in seinem Hub an die Summe der Stellwege beider Kniehebel (9) angelenkte Hydraulikzylinder (8) angreift.

FIG.1

Die Erfindung bezieht sich auf eine Ladebrücke für Lastfahrzeuge, mit zwei einander gegenüberliegenden Bordwänden, die über eine hydraulische Betätigungsvorrichtung um eine im Bereich ihrer Unterkanten verlaufende Schwenkachse auf- und zuklappbar gelagert sind, wobei die Betätigungsvorrichtung einen sich im Stirnseitenbereich quer zwischen den Bordwänden erstreckenden Hydraulikzylinder aufweist, der beiderends jeweils über ein Hebelgestänge mit radialem Abstand von der Schwenkachse an der Bordwand angelenkt ist.

Um die Bordwände einer Ladebrücke nicht händisch auf- und zuklappen zu müssen, was vor allem bei den längeren seitlichen Bordwänden allein aus Gewichtsgründen recht umständlich und anstrengend ist, gibt es vor allem für kippbare Ladebrücken bereits Betätigungsvorrichtungen für die Bordwände, die ein selbständiges Verschwenken der Bordwände über Hydraulikzylinder und Seilzüge bzw. Hebelgestänge erlauben. Allerdings ist bisher meist für jede Bordwand ein eigener Hydraulikzylinder erforderlich, um die Bordwände wahlweise einzeln oder gemeinsam betätigen zu können, wodurch sich ein beträchtlicher Bauaufwand ergibt. Gemäß dem SU-Erfinderschein 962 046 wurde zwar bereits vorgeschlagen, für beide Bordwände einen stirnseitigen gemeinsamen Hydraulikzylinder anzuordnen, der jeweils über schubstangenartige Hebel die Bordwände betätigt, doch lassen sich durch diese Hebelgestänge die Bordwände nur etwa um 90° auf- und zuklappen und ein vollständiges Abklappen erfordert ein Aushängen der Gestänge.

Der Erfindung liegt daher die Aufgabe zu Grunde, diese Mängel zu beseitigen und eine Ladebrücke der eingangs geschilderten Art zu schaffen, deren Betätigungsvorrichtung ein funktonssicheres und vor allem auch beliebig weites Auf-und Zuklappen der Bordwände gewährleistet.

Die Erfindung löst diese Aufgabe dadurch, daß das Hebelgestänge einen einerseits an der Bordwand, andererseits an einem brückenfesten Träger angelenkten Kniehebel bildet, an dessen Knickgelenk der in seinem Hub an die Summe der Stellwege beider Kniehebel angepaßte Hydraulikzylinder angreift. Der gemeinsame Hydraulikzylinder klappt durch Aus- oder Einfahren jeweils die Bordwand, die entriegelt ist, unter gleichzeitiger Abstützung an der verriegelten Bordwand auf-oder zu oder verschwenkt bei einem Entriegeln beider Bordwände auch beide Bordwände gleichzeitig. Die Kniehebel bringen dabei sowohl den für eine ordnungsgemäße Funktion erforderlichen Kraftansatz an den Bordwänden als auch die Abstützung für die notwendige schwimmende Lagerung des Hydraulikzylinders mit sich und gewährleisten außerdem eine im wesentlichen ortsfeste Lage des Hydraulikzylinders. Die Betätigungsvorrichtung kann so ohne Platzprobleme im Bereich der vorderen oder auch hinteren Stirnseite der Ladebrücke untergebracht werden und bietet eine rationale Möglichkeit zur automatischen Betätigung der beiden seitlichen Bordwände, wozu es auch bei einem vollständigen Abklappen lediglich der Entriegelung der zu betätigenden Bordwand bzw. Bordwände und der Druckbeaufschlagung des Hydraulikzylinders zum Aus- oder Einfahren bedarf.

Ist die brückenfeste Anlenkstelle der Kniehebel mit Abstand von den Schwenkachsen an einem Träger des Ladebrückenrahmens od. dgl. vorgesehen, kommt es zu einer günstigen Hebelbewegung beim Aus- und Einfahren des Hydraulikzylinders und zu einem wirkungsvollen Kräftespiel beim Auf- und Zuklappen der Bordwände.

Der Hydraulikzylinder bzw. das den Hydraulikzylinder speisende Hydrauliksystem ist aus Sicherheitsgründen mit einem Überdruckventil ausgestattet, um Funktionsstörungen oder Beschädigungen durch etwaige Hindernisse und Widerstände bei der Bordwandbetätigung zu vermeiden, und vorteilhaft ist es auch, wenn für den Hydraulikzylinder eine Freigabeeinrichtung vorgesehen ist, die eine freie Bewegung des Hydraulikzylinders erlaubt, wozu eine einfache Kurzschlußverbindung od.dgl. der Zylinderräume genügt. Durch diese Zylinderfreigabe lassen sich die Bordwände unabhängig von der Betätigungsvorrichtung bewegen, was auch ein händisches Betätigen der Bordwände gestattet und außerdem bei schwenkbar und pendelnd gelagerten Bordwänden die Bordwände für eine entsprechende Pendelbewegung während des Kippens der Ladebrücke od. dgl. freigibt.

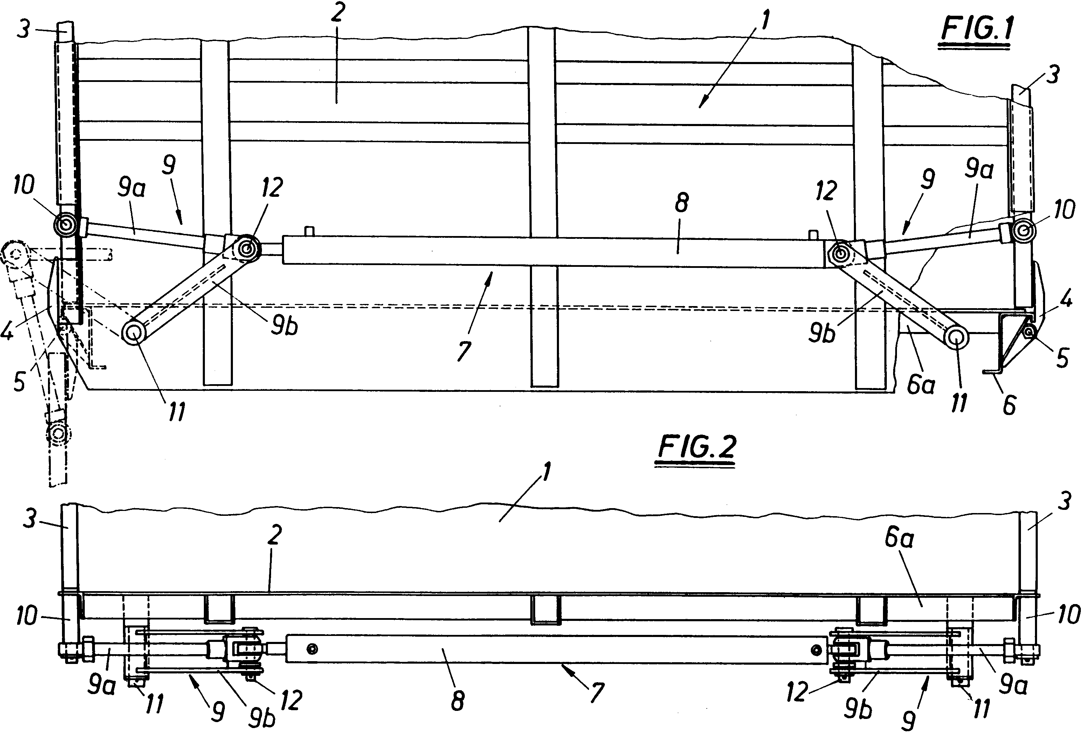

In der Zeichnung ist der Erfindungsgegenstand an Hand eines Ausführungsbeispieles näher veranschaulicht, und zwar zeigen Fig. 1 und 2 einen Teil einer erfindungsgemäßen Ladebrücke in Stirnansicht bzw. in Draufsicht.

Eine Ladebrücke 1 weist eine frontseitige Bordwand 2 und zwei längsseitige Bordwände 3 auf, wobei die Bordwand 2 fest und die seitlichen Bordwände 3 über Scharniere 4 um eine entlang der Unterkanten verlaufende Schwenkachse 5 auf- und zuklappbar am Ladebrückenrahmen 6 abgestützt sind. Zur Betätigung dieser seitlichen Bordwände 3 gibt es im Bereich der frontseitigen Bordwand 2 eine Betätigungsvorrichtung 7 aus einem sich quererstreckenden Hydraulikzylinder 8, der beiderends über Kniehebel 9 auf die Bordwände 3 einwirkt. Die Kniehebel 9 sind dazu jeweils mit ihrem einen Hebelarm 9a, dem Betätigungshebel, mit Abstand von der Schwenkachse 5 über einen Hebebolzen 10 an der zugehörigen Bordwand 3 und mit ihrem anderen Hebelarm 9b, dem Führungshebel, über ein Stützlager 11 an einem Träger 6a des Ladebrückrahmens 6 angelenkt, und der Hydraulikzylinder 8 greift beiderends am als Gabelkopf ausgebildeten Kniegelenk 12 der beiden Kniehebel 9 an.

Wird nun, wie in Fig. 1 angedeutet, die linke Bordwand 3 durch Öffnen des nicht weiter dargestellten Nockenverschlusses od. dgl. entriegelt und der Hydraulikzylinder 8 im Ausfahrsinn druckbeaufschlagt, drückt der Hydraulikzylinder 8 den linken Kniehebel 9 im Aufschwenksinn der linken Bordwand auswärts und klappt so diese Bordwand auf (strichpunktierte Darstellung). Auf Grund einer Verriegelung der rechten Bordwand 3 ist bei der Aufschwenkbewegung eine gleichzeitige Bewegung der rechten Bordwand unmöglich und diese dient daher als feste Abstützung für den Hydraulikzylinder 8. Durch entsprechendes Einfahren des Hydraulikzylinders 8 läßt sich die linke Bordwand 3 wiederum hochschwenken, wobei selbstverständlich beim Auf- und Abklappen mit einem entsprechenden Ansteuern des Hydraulikzylinders 8 die Bordwand in jeder beliebigen Schwenklage festgehalten werden kann.

Wird statt der linken Bordwand die rechte Bordwand 3 entriegelt, läßt sich mit dem Hydraulikzylinder 8 in gleicher Weise diese rechte Bordwand 3 auf- und zuklappen und durch ein Entriegeln beider Bordwände 3 kommt es beim Aus- und Einfahren des Hydraulikzylinders 8 zu einem gemeinsamen Öffnen beider Bordwände 3, da der Hub des Hydraulikzylinders 8 auf die erforderliche gemeinsame Stellweglänge ausgelegt ist.

Mit einem einzigen Hydraulikzylinder 8 lassen sich demnach die beiden seitlichen Bordwände 3 der Ladebrücke 1 jeweils einzeln oder auch gemeinsam betätigen.

**Patentansprüche**

1. Ladebrücke (1) für Lastfahrzeuge, mit zwei einander gegenüberliegenden Bordwänden (3), die über eine hydraulische Betätigungsvorrichtung (7) um eine im Bereich ihrer Unterkanten verlaufende Schwenkachse (5) auf- und zuklappbar gelagert sind, wobei die Betätigungsvorrichtung (7) einen sich in Stirnseitenbereich quer zwischen den Bordwänden (3) erstreckenden Hydraulikzylinder (8) aufweist, der beiderends jeweils über ein Hebelgestänge mit radialem Abstand von der Schwenkachse (5) an der Bordwand (3) angelenkt ist, dadurch gekennzeichnet, daß das Hebelgestänge einen einerseits an der Bordwand (3), anderseits an einem brückenfesten Träger (6a) angelenkten Kniehebel (9) bildet, an dessen Kniegelenk (12) der in seinem Hub an die Summe der Stellwege beider Kniehebel (9) angepaßte Hydraulikzylinder (8) angreift.

2. Ladebrücke nach Anspruch 1, dadurch gekennzeichnet, daß die brückenfeste Anlenkstelle (11) der Kniehebel (9) mit Abstand von den Schwenkachsen (5) an einem Träger (6a) des Ladebrückenrahmens (6) od. dgl. vorgesehen ist.

3. Ladebrücke nach Anspruch 1 oder 2, dadurch gekennzeichnet, daß für den Hydraulikzylinder (8) eine Freigabeeinrichtung vorgesehen ist.

*FIG.1*

2    1

3

9    9a

10    12

9b    8    12    9    9a    10

4    7    4

5    9b    6a    5

11    11    6

EP 0 516 615 A2

*FIG.2*

1

3    6a    3

2

10    8    7    10

9a    9    9b    12    12    9b    9    9a

11    11